# EUROPÄISCHE PATENTSCHRIFT

(11) **EP 1 838 136 B1**
(45) Veröffentlichungstag und Bekanntmachung des Hinweises auf die Patenterteilung: **29.04.2015**
(21) Anmeldenummer: 07006056.1
(22) Anmeldetag: 23.03.2007
(51) Int. Cl.: H05B 3/58

(54) **Heizvorrichtung**
Heating device
Dispositif de chauffage

(30) Priorität: 24.03.2006 DE 202006004913 U
(43) Veröffentlichungstag der Anmeldung: 26.09.2007
(73) Patentinhaber: Ihne & Tesch GmbH, 58507 Lüdenscheid (DE)
(72) Erfinder: Thies, Rolf-Ulrich, 58511 Lüdenscheid (DE)
(74) Vertreter: Schmitt, Meinrad

(56) Entgegenhaltungen:
- DE-A1- 2 145 067

## Beschreibung

Die Erfindung bezieht sich auf eine Heizvorrichtung gemäß den im Oberbegriff des Patentanspruchs 1 angegebenen Merkmalen.

Aus der DE 21 45 067 A1 ist eine derartige Heizvorrichtung mit einem Grundkörper bekannt, welcher ringförmig ausgebildet ist und auf der Außenfläche eines zu beheizenden Bauteils vorgesehen ist. Der Grundkörper besteht aus zwei Halbschalen mit radial nach außen offenen Aufnahmenuten, in welchen jeweils ein Heizleiter angeordnet ist. Die Heizleiter sind in Umfangsrichtung U-förmig ausgebildet und erstrecken sich ebenso wie die beiden Halbschalen jeweils über einen Winkelbereich von etwas weniger als 180° bezogen auf die Längsachse der Heizvorrichtung, wobei die elektrischen Anschlüsse diametral gegenüber liegen. Zum Festspannen der Heizvorrichtung auf einem Bauteil und zur Verbindung der beiden Halbschalen mit den beiden Heizleitern ist eine radial außen angeordnete Spanneinrichtung vorgesehen, welche ebenfalls zweiteilig ausgebildet ist und zwei Spannbänder enthält, welche mittels diametral angeordneten Spannelementen verbunden sind. Die Enden der beiden Spannbänder sind zurückgebogen und mit dem dortigen Teil des jeweiligen Spannbands verbunden. Da in den beiden Verbindungsbereichen die Heizleitungen einen vergleichsweise großen Abstand zum Bauteil aufweisen, besteht dort die Gefahr einer verminderten Wärmezufuhr. Aufgrund der zweiteiligen Ausbildung der Heizvorrichtung ist ein nicht unerheblicher Fertigungsaufwand gegeben. Des Weiteren erfordert die Anordnung der radialen Aufnahmenuten einen entsprechenden Fertigungsaufwand, wobei zusätzliche Maßnahmen erforderlich sind, um einen guten und/oder gleichmäßigen Wärmeübergang von den Heizleitungen auf die jeweilige Halbschale des Grundkörpers zu ermöglichen.

Ferner sind aus der US 2 159 661 sowie der US 3 285 329 ringförmig ausgebildete Heizvorrichtungen bekannt, deren Wärmeübertragungselemente als halb- oder viertelkreisförmige Ringschalen ausgebildet sind, welche mittels einer Spanneinrichtung bzw. einem Spannband auf der Außenfläche des zu beheizenden Bauteils festlegbar sind. Die genannten Ringschalen enthalten radial nach außen offene Aufnahmenuten, in welche die jeweiligen Heizleiter eingesetzt sind. Es sind besondere Maßnahmen erforderlich, um einerseits eine ordnungsgemäße Montage der genannten Ringschalen auf dem zu beheizenden Bauteil zu ermöglichen und andererseits mechanische Überbeanspruchungen der elektrischen Heizleiter durch die Spanneinrichtung zu vermeiden.

Hiervon ausgehend liegt der Erfindung die Aufgabe zugrunde, mit einem geringen konstruktiven Aufwand die Heizvorrichtung dahingehend weiterzubilden, dass ein verbesserter Wärmeübergang auf das Bauteil erreicht wird, wobei ein geringes und/oder weitgehend gleichförmiges Temperaturgefälle vorgegeben werden soll. Die Heizvorrichtung soll einen geringen Fertigungs- und Materialaufwand erfordern und einen optimierten Wärmeverlauf ermöglichen. Des weiteren soll mit hoher Zuverlässigkeit und Reproduzierbarkeit ein reduziertes Temperaturgefälle zwischen dem Heizelement und dem Bauteil, welches insbesondere eine zylindrische Außenfläche aufweist, erreicht werden.

Die Lösung dieser Aufgabe erfolgt gemäß den Merkmalen des Patentanspruchs 1.

Die erfindungsgemäße Heizvorrichtung zeichnet sich durch einen funktionssicheren und den Anforderungen der Praxis gerechten Aufbau aus. Der Grundkörper besteht aus einem gut wärmeleitenden Material, und zwar je nach der geforderten Einsatztemperatur, insbesondere aus Aluminium, Messing oder vergleichbaren Werkstoffen bzw. Legierungen. Der Grundkörper und insbesondere dessen radial innen liegende Anlagefläche ist mit hoher Paßgenauigkeit auf die Außenfläche des Bauteils abgestimmt, wodurch ein optimaler homogener Wärmeverlauf erreicht wird. Der Grundkörper ist ein vorgefertigter einteiliger Formkörper, wobei die Anlagefläche problemlos und mit hoher Paßgenauigkeit entsprechend der Außenfläche des Bauteils herstellbar ist. Vor allem für Bauteile mit zylindrischer Außenfläche kann die Anlagefläche des Grundkörpers mit hoher Präzision entsprechend der zylindrischen Außenfläche ausgebildet werden. Im Rahmen der Erfindung kann die Heizvorrichtung bzw. deren Grundkörper auch für solche Bauteile ausgebildet sein, deren Außenflächen eine andere Geometrie aufweisen, wie beispielsweise polygonale Außenflächen, konkave oder konvexe Außenflächen, wobei durch entsprechende Bearbeitung der Anlagefläche deren Anpassung an die jeweiligen Außenfläche gleichwohl problemlos und mit hoher Paßgenauigkeit erfolgen kann. Die beiden Schenkel befinden sich, bezogen auf die Längsachse der Heizvorrichtung, jeweils an den beiden axialen Enden des Grundkörpers. Die Wandflächen der Ausnehmung sind im wesentlichen glatt ausgebildet und gewährleisten einen guten Wärmeübergang von dem bevorzugt unter vorgegebener Vorspannung anliegenden Heizelement. Nuten, Arretierungsmittel oder dergleichen für die einzelnen Heizleiter sind in den Wandflächen und/oder dem Grundkörper nicht vorhanden. Der Grundkörper besitzt einen im wesentlichen U-förmigen radial nach außen offenen Querschnitt, wobei die beiden in radialer Richtung sich erstreckenden Schenkel zur Auflage der Spanneinrichtung bzw. deren Spannband vorgesehen sind und wobei zwischen diesen Schenkeln die Ausnehmung mit dem Heizelement angeordnet ist. Der Grundkörper ist in Richtung seiner Längsachse sowohl radial als auch axial durchgehend geschlitzt ausgebildet. Aufgrund des somit vorhandenen Spaltes zwischen den Enden des sich über nahezu und/oder nur einige Grade kleiner als 360° einteilig ausgebildeten Grundkörpers kann dieser mittels der Spanneinrichtung fest und/oder mit vorgegebener Vorspannung auf der Außenfläche des Bauteils festgelegt werden, so dass mit hoher Funktionssicherheit und Reproduzierbarkeit ein geringes Temperaturgefälle zwischen dem Heizelement und dem Bauteil sichergestellt ist. Das Spannband weist bevorzugt einen im wesentlichen U-förmigen radial nach innen offenen Querschnitt auf, wobei die axialen Ränder radial nach innen zur Längsachse umgebogen sind und an den axialen Stirnflächen des jeweiligen Schenkels außen anliegen.

Der oder die elektrischen Heizleiter sind in eine elektrische Isolierung eingebettet und/oder von dieser umgeben, welche aus einem Werkstoff mit hoher Leitfähigkeit besteht. Der oder die elektrischen Heizleiter bilden das Heizelement, welches als vorgefertigte Baugruppe in die Ausnehmung des Grundkörpers eingesetzt ist und mittels der Spanneinrichtung unter vorgegebener Vorspannung festgelegt ist. Die Isolierung ist nicht als eine den Leiterdraht koaxial umgebende Schicht mit vorgegebener vergleichsweise geringer Dicke ausgebildet, sondern füllt die Zwischenräume zwischen den zweckmäßig in Umfangsrichtung nebeneinander und/oder größtenteils parallel liegenden einzelnen Heizleitern oder Teilen eines Heizleiters vollständig aus, und dient somit in bevorzugter Weise zur Arretierung und/oder Ausrichtung und/oder definierter Abstandsvorgabe zwischen den einzelnen Heizleitern und/oder Teilen derselben. Das Isoliermaterial ist in vorteilhafter Weise ein einteiliges Distanz- und Fixierungselement ausgebildet, in welches der oder die elektrischen Heizleiter bzw. deren Teile dauerhaft und/oder mit guter Paßgenauigkeit und/oder Ausrichtung zueinander integriert sind. Somit entfallen einzelne Nuten, Umlenkungen oder sonstige Arretierungsmittel im Grundkörper und/oder der genannten inneren Wandfläche des Grundkörpers. Des Weiteren ist die Querschnittsfläche des Isoliermaterials, abgesehen von den Querschnittsflächen des oder der elektrischen Heizleiter bzw. deren Teilen, wesentlich größer als die Querschnittsfläche der einzelnen und/oder sämtlicher Heizleiter bzw. deren Teile, wobei die genannten Querschnittsflächen in einer Axialebene liegen. Ferner ist es von besonderer Bedeutung, dass die elektrische Isolierung bzw. das Isoliermaterial des Heizelements eine vorgegebene Flexibilität und Verformbarkeit derart aufweist, dass es an die Wandfläche der Ausnehmung beim Festspannen mit hoher Funktionssicherheit angepaßt und/oder großflächig anliegt, wobei Fertigungsungenauigkeiten oder Unregelmäßigkeiten der Wandfläche zuverlässig ausgeglichen werden und ein optimierter Wärmeübergang sichergestellt ist.

Die elektrische Isolierung ist erfindungsgemäß ein Puffer mit einer Ausgleichsfunktion. Der von der Spanneinrichtung auf das Heizelement einwirkende Druck wird von der Isolierung aufgenommen und/oder großflächig verteilt, so dass eine Überlastung oder Beschädigung des oder der Heizleiter vermieden wird. Da die Spanneinrichtung auf den Schenkeln des Innenkörpers aufliegt, ist bei der Montage bzw. beim Festspannen eine Begrenzung der Vorspannkraft und/oder der Druckbelastung des Heizelements sichergestellt. Die Dimensionierung der Ausnehmung einerseits und des verformbaren und/oder nachgiebigen Heizelements andererseits sind derart aufeinander abgestimmt, dass das Heizelement nach der Montage unter vorgegebener Vorspannung in die Ausnehmung eingepreßt ist und an deren Wandfläche fest anliegt, wobei durch Auflage der Spanneinrichtung auf den radial außen liegenden Umfangsflächen der Schenkel die Vorspannung definiert begrenzt ist.

Die Spanneinrichtung enthält ein den ringförmigen Grundkörper umgebendes und auf dem oder den freien Enden des oder der genannten Schenkel aufliegendes Spannband. Weiterhin enthält die Spanneinrichtung eine Spannvorrichtung zum Festspannen des Grundkörpers und des Heizelements, wobei eine Spannschraube oder sonstige Spannelemente, Hebelverbindungen oder dergleichen vorgesehen sind. Die Abmessungen der genannten Ausnehmung und des Heizelements sind derart aufeinander abgestimmt, dass mittels der Spanneinrichtung das Heizelement definiert in radialer Richtung unter Vorspannung an den Grundkörper gepreßt wird, wodurch einerseits ein optimierter und/oder gleichförmiger Wärmeübergang erreicht wird und andererseits mittels der Schenkel eine unzulässig hohe Vorspannung auf das Heizelement vermieden wird. Die Spanneinrichtung und insbesondere deren Spannband weist in bevorzugter Weise eine um einen vorgegebenen Betrag geringere Wärmeleitfähigkeit auf als der Grundkörper. Je nach Einsatztemperatur ist ein geeignetes Heizelement vorgesehen mit insbesondere Glimmer, mineralischer- oder keramischer Isolierung. Auch kann das Heizelement optional zusätzlich mit einer Schicht und/oder mineralischen Wärmeisolierung abgedeckt und/oder umgeben sein. Die Spanneinrichtung, insbesondere deren Spannband, ist in vorteilhafter Weise federnd ausgebildet und besteht vorteilhaft aus einer geeigneten Legierung, wie insbesondere Edelstahl.

Die Enden des Spannbandes sind im Bereich des genannten Spaltes in bevorzugter Weise radial nach innen umgebogen und/oder abgekantet, wodurch eine definierte und in Umfangsrichtung fixierte Festlegung der Spanneinrichtung bezüglich des Grundkörpers sichergestellt ist. Des weiteren ist die Spanneinrichtung in axialer Richtung bezüglich des Grundkörpers fixiert, insbesondere in Nuten des oder der Schenkel des Grundkörpers oder mittels der radial nach innen umgebogenen Ränder. In einer bevorzugten Ausgestaltung der Erfindung übergreift die Spanneinrichtung bzw. deren Spannband jeweils die End- oder Umfangsflächen der Schenkel vollständig, wobei die axialen Ränder des Spannbandes radial nach innen zur Längsachse gebogen sind und an den axialen Endflächen oder Stirnflächen der Schenkel bzw. des Grundkörpers anliegen. Somit ist eine definierte und/oder feste mechanische Verbindung zwischen den einzelnen Bauteilen erreicht. Aufgrund der federnden Wirkung und/oder federelastischen Ausbildung der Spanneinrichtung, insbesondere deren Spannband, wird beim Lösen der Spanneinrichtung, insbesondere der genannten Spannschraube, der Grundkörper aufgeweitet, wodurch eine leichte Montage ermöglicht ist.

Für den elektrischen Anschluss des Heizelements bzw. dessen elektrischen Leiter sind vorteilhaft hitzebeständige und/oder flexible und/oder in der Länge variierende Anschlußleiter vorgesehen. Im Verbindungsbereich der elektrischen Leiter des Heizelements und den Anschlußleitern ist vorteilhaft eine Abdeckung vorgesehen, bevorzugt eine geeignete bzw. angepaßte Metallkappe, welche mit der Spanneinrichtung und insbesondere deren Spannband in geeigneter Weise verbunden ist, bevorzugt durch Lötung oder Schweißung. Ferner ist optional zusätzlich in vorteilhafter Weise noch am Grundkörper, insbesondere in dessen Ausnehmung, ein Temperaturfühler vorgesehen, dessen zugeordnete Anschlußleiter ebenso wie die des oder der Heizleiter des Heizelements zweckmäßig durch die genannte Abdeckung nach außen geführt sind.

Besondere Ausgestaltungen und Weiterbildungen der Erfindung sind in den Unteransprüchen und der weiteren Beschreibung angegeben.

Die Erfindung wird nachfolgend anhand der besonderen in der Zeichnung dargestellten Ausführungsbeispiele näher erläutert, ohne dass insoweit eine Beschränkung erfolgt. Es zeigen:
- Fig. 1: eine perspektivische Ansicht der Heizvorrichtung,
- Fig. 2: einen Schnitt entlang Schnittlinie II gemäß Fig. 1,
- Fig. 3: einen Schnitt einer alternativen Ausgestaltung der Heizvorrichtung entlang Schnittlinie II,
- Fig. 4: vergrößert und in einer radialen Schnittebene das Detail IV gemäß Fig. 1.

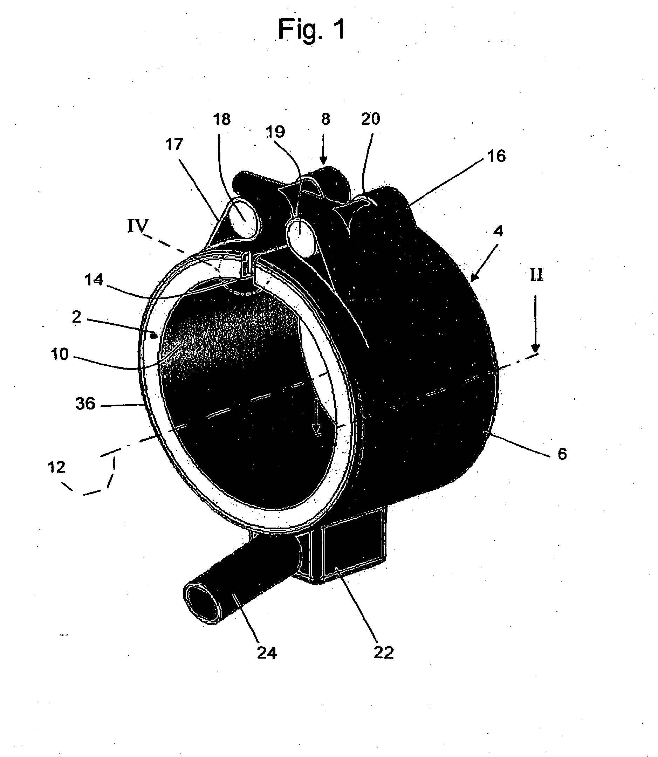

Fig. 1 zeigt in perspektivischer Darstellung die Heizvorrichtung mit dem Grundkörper 2 und mit der diesen umgebenden Spanneinrichtung 4, welche ein federndes Spannband 6 und eine Spannvorrichtung 8 enthält. Der einteilig ausgebildete und sich im wesentlichen bis zu 360° oder nur wenige Grad weniger in Umfangsrichtung erstreckende Grundkörper 2 besitzt eine zylindrische Anlagefläche 10, welche an die Außenfläche des hier nicht dargestellten Bauteils angepaßt ist. Der Grundkörper 2 ist im wesentlichen zylindrisch ausgebildet und mit einem einzigen sowohl in Richtung der Längsachse 12, als auch in radialer Richtung durchgehenden Spalt 14 versehen und kann somit mittels der Spanneinrichtung 4 auf der Außenfläche des Bauteils festgespannt werden. Die Spannvorrichtung 8 ist vorteilhaft im Bereich des Spaltes 14 vorgesehen. Die Spannvorrichtung 8 enthält im Bereich der Enden und/oder vor den Enden des Spannbandes 6 angeordnete separate Halterungen 16, 17, welche mit dem Spannband 6 fest, insbesondere durch Schweißung verbunden sind. Es ist von besonderer Bedeutung, dass die Halterungen 16, 17 separate und fest mit dem Spannband verbundene Bauteile sind, denn erfindungsgemäß sind die Enden des Spannbandes im Spalt 14 radial nach innen umgebogen, wie nachfolgend noch zu erläutern ist. Die Halterungen 16, 17 dienen zur Festlegung von Bolzen 18, 19, wobei der eine Bolzen 18 eine Durchgangsbohrung und der andere Bolzen 19 ein Innengewinde für eine Spannschraube 20 aufweisen. An dem Spannband 6 ist ferner eine Abdeckung 22 befestigt, welche zweckmäßig als eine Metallkappe ausgebildet ist. Mittels der Abdeckung 22 wird die elektrische Verbindung des Heizelements und deren Anschlußleiter abgedeckt, welche durch die Tülle 24 nach außen geführt sind. Auch die Anschlußleiter eines vorteilhaft dem Grundkörper zugeordneten und wie das Heizelement im Grundkörper 2 vorgesehenen Temperaturfühlers sind entsprechend nach außen geführt.

Der Grundkörper 2 besteht aus einem gut wärmeleitenden Material und ist als einstückiger vorgefertigter Formkörper ausgebildet. Der Grundkörper ist zweckmäßig ein Drehteil und die Herstellung und/oder die Bearbeitung der Anlagefläche 10 ist in einfacher Weise und mit hoher Präzision durchführbar und an die Geometrie der Außenfläche des Bauteils angepaßt. Es sei hier ausdrücklich festgehalten, dass die Anlagefläche 10 im Rahmen der Erfindung alternativ auch eine andere Geometrie, beispielsweise eine Polygonfläche, aufweisen kann, und zwar übereinstimmend und/oder angepaßt an die Geometrie der Außenfläche des Bauteils. Des weiteren kann der durchgehende Spalt 14 bevorzugt in einer zur Längsachse 12 unter einem vorgegebenen Winkel schrägstehenden Ebene angeordnet sein.

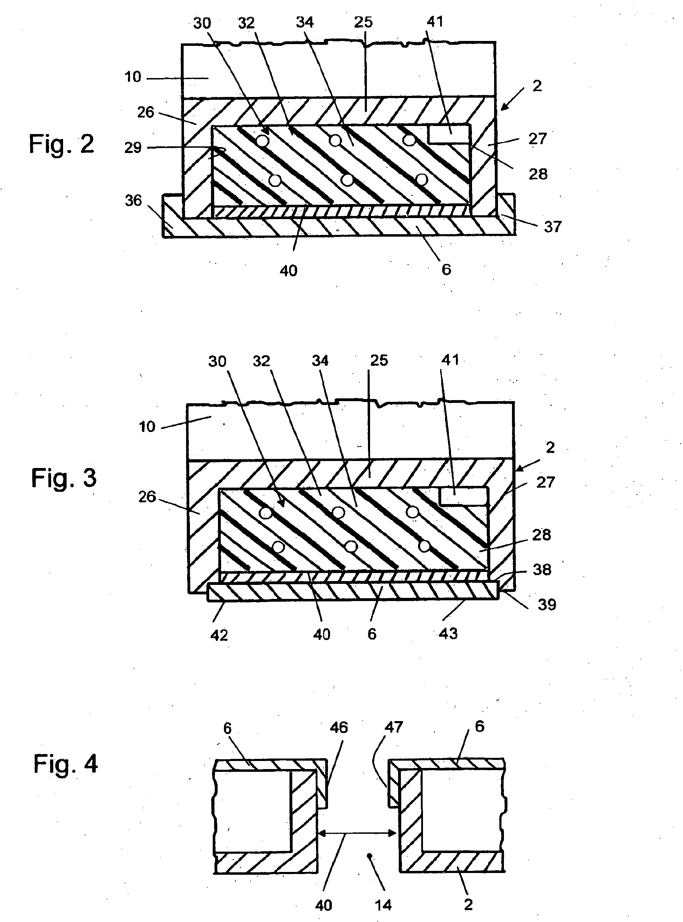

Fig. 2 zeigt einen Schnitt durch die Heizvorrichtung in einer Axialebene entlang der Schnittlinie II gemäß Fig. 1. Wie ersichtlich, besitzt der Grundkörper 2 eine im wesentlichen U-förmige Querschnittsfläche mit einem Boden 25 sowie zwei in radialer Richtung nach außen weisenden Schenkeln 26, 27, welche an den axialen Enden des Grundkörpers 2 angeordnet sind. Zwischen den Schenkeln 26, 27 und dem Boden 25 ist somit eine Ausnehmung 28 vorhanden, welche sich über den Umfang über einen Winkel von annähernd 360° erstreckt und in welcher das vorgefertigte Heizelement 30 angeordnet ist. Die Wandfläche 29 der Ausnehmung 28 ist im wesentlichen glatt und/oder geschlossen und/oder durchgehend, somit ohne Nuten, ausgebildet. Das Heizelement 30 enthält hier schematisch angedeutete elektrische Heizleiter 32, welche von einer geeigneten elektrischen Isolierung 34 umgeben und/oder in diese eingebettet sind. Die Ausnehmung 28 wird radial außen mit dem Spannband 6 abgeschlossen, welches auf den freien Enden der Schenkel 26, 27 aufliegt. Mittels des Spannbandes 6 wird das Heizelement 30 definiert in die Ausnehmung 28, bevorzugt unter Vorspannung, gepreßt. Das Spannband 6 übergreift die freien Enden der Schenkel 26, 27 und seine axialen Ränder 36, 37 sind radial nach innen umgebogen und liegen axial außen an den Stirnflächen der Schenkel 26, 27 an. Somit ist eine axiale Fixierung des Spannbandes 6 auf dem Grundkörper 2 vorgegeben. Ferner ist in vorteilhafter Weise zwischen dem Heizelement 30 und dem Spannband 6 eine Schicht 40 insbesondere aus elektrisch- und/oder wärmeisolierendem Material vorgesehen. Diese Schicht 40 zeichnet sich in bevorzugter Weise durch eine Ausgleichsfunktion und/oder Dämpfungsfunktion aus. Des Weiteren ist vorteilhaft in der Ausnehmung 28 des Grundkörpers 2 ein Temperaturfühler 41 angeordnet.

In Fig. 3 ist eine alternative Ausgestaltung dargestellt, gemäß welcher die freien Enden der Schenkel 26, 27 mit zur Ausnehmung 28 offenen Umfangsnuten 38 versehen sind, wobei ferner radiale Ansätze 39 vorhanden sind, welche sich radial zumindest teilweise bis zum Spannband 6 erstrecken und dieses somit in axialer Richtung bezüglich des Grundkörpers 2 fixieren. Bei diesem Ausführungsbeispiel greifen die axialen Ränder 42, 43 des Spannbandes 6 in die offenen Umfangsnuten 38 der Schenkel 26, 27 ein.

Fig. 4 zeigt vergrößert im Schnitt das Detail IV mit dem in Umfangsrichtung eine Breite 44 aufweisenden Spalt 14 des Grundkörpers 2. Wie ersichtlich, sind die Enden 46, 47 des Spannbandes 6 in radialer Richtung nach innen in den Spalt 14 umgebogen bzw. abgewinkelt, so dass das Spannband 6 bezüglich des Grundkörpers 2 in Umfangsrichtung fixiert ist. Aufgrund der gemäß Fig. 2 radial nach innen umgebogenen Ränder 36, 37 bzw. der gemäß Fig. 3 vorgesehenen Umfangsnuten 38 zur Aufnahme der Ränder 42, 43 des Spannbandes 6 in Kombination mit den in den Spalt 14 umgebogenen Enden 46, 47 ist das Spannband 6 zuverlässig auf dem Grundkörper 2 festgelegt. Das sich über den Umfang erstreckende, hier nicht weiter dargestellte Heizelement endet beidseits des Spaltes 14.

### Bezugszeichen

- 2: Grundkörper
- 4: Spanneinrichtung
- 6: Spannband
- 8: Spannvorrichtung
- 10: Anlagefläche von 2
- 12: Längsachse
- 14: Spalt in 2
- 16, 17: Halterung von 4
- 18, 19: Bolzen
- 20: Spannschraube
- 22: Abdeckung / Metallkappe
- 24: Tülle
- 25: Boden von 2
- 26, 27: Schenkel von 2
- 28: Ausnehmung in 2
- 29: Wandfläche von 28
- 30: Heizelement
- 32: Heizleiter von 30
- 34: elektrische Isolierung von 30
- 36, 37: axialer Rand von 6
- 38: Umfangsnut in 26, 27
- 39: radialer Ansatz von 26, 27
- 40: Schicht
- 41: Temperaturfühler
- 42, 43: axialer Rand von 6
- 44: Breite von 14
- 46,47: Ende von 6

## Patentansprüche

1. Heizvorrichtung zur Beheizung eines Bauteils, enthaltend einen im wesentlichen ringförmigen Grundkörper (2), welcher eine an die Außenfläche des Bauteils abgestimmten und/oder angepaßte Anlagefläche (10) aufweist und aus einem gut wärmeleitenden Material besteht sowie eine radial nach außen offene Ausnehmung (28) zur Aufnahme eines Heizleiters (32) aufweist, und ferner enthaltend eine den Grundkörper (2) und den Heizleiter (32) umgebende Spanneinrichtung (4), mittels welcher die Heizvorrichtung auf der insbesondere zylindrischen Außenfläche des Bauteils festlegbar ist, wobei der oder die Heizleiter (32) in eine elektrische Isolierung (34) eingebettet sind und zusammen mit dieser ein einheitliches Heizelement (30) bilden, welches mit seiner Außenfläche an der durchgehenden Wandfläche (29) der Ausnehmung (28) mit vorgegebener Vorspannung anliegt, wobei das Heizelement (30) mittels des Spannbandes (6) in die Ausnehmung (28) gepresst ist,
**dadurch gekennzeichnet, dass** der Grundkörper (2) einteilig ausgebildet ist und einen im wesentlichen U-förmigen Querschnitt mit zwei an den axialen Enden angeordneten und radial nach außen gerichteten Schenkeln (26, 27) aufweist, zwischen welchen sich die Ausnehmung (28) befindet.

2. Heizvorrichtung nach Anspruch 1, **dadurch gekennzeichnet, dass** das Heizelement (30) als eine vorgefertigte einstückige und/oder verformbare Baugruppe ausgebildet ist.

3. Heizvorrichtung nach Anspruch 1 oder 2, **dadurch gekennzeichnet, dass** die Isolierung (34) des Heizelements (30) flexibel und/oder elastisch oder plastisch verformbar ausgebildet ist und/oder dass die elektrische Isolierung (34) aus einem Material mit hoher Wärmeleitfähigkeit besteht.

4. Heizvorrichtung nach einem der Ansprüche 1 bis 3, **dadurch gekennzeichnet, dass** die Spanneinrichtung (4) ein Spannband (6) enthält, welches außen auf dem Grundkörper (2) insbesondere dessen Schenkeln oder Stegen (26, 27), aufliegt, und/oder dass die Heizvorrichtung im montierten Zustand auf dem Bauteil mit einer mittels der Spannvorrichtung (8) vorgegebenen Vorspannkraft aufliegt und/oder dass die Spanneinrichtung (4), insbesondere deren Spannband (6), eine um einen vorgegebenen Betrag geringere Wärmeleitfähigkeit als der Grundkörper (2) aufweist

5. Heizvorrichtung nach einem der Ansprüche 1 bis 4, **dadurch gekennzeichnet, dass** der Grundkörper (2) als ein vorgefertigter Formkörper und/oder als ein Drehteil ausgebildet ist und/oder dass der Grundkörper (2) aus einem gut wärmeleitenden Material besteht, insbesondere Aluminium, Messing oder in der Wärmeleitfähigkeit vergleichbaren Material oder Legierung daraus.

6. Heizvorrichtung, insbesondere nach einem der Ansprüche 1 bis 5, **dadurch gekennzeichnet, dass** die freien Enden (42, 43) des Spannbandes (6) im Bereich eines Spaltes (14) des Grundkörpers (2) radial nach innen abgewinkelt und/oder umgebogen sind zwecks Festlegung der Spanneinrichtung (4) bezüglich des Grundkörpers (2) in Umfangsrichtung.

7. Heizvorrichtung nach einem der Ansprüche 1 bis 6, **dadurch gekennzeichnet, dass** das Spannband (6) axiale Ränder (36, 37) aufweist, welche radial nach innen zur Längsachse (12) abgewinkelt sind und an den axialen Stirnflächen der Stege (26, 27) anliegen.

8. Heizvorrichtung nach einem der Ansprüche 1 bis 6, **dadurch gekennzeichnet, dass** die Schenkel (26, 27) im Bereich ihrer radial nach außen gerichteten Enden eine Umfangsnut (38) aufweisen, in welche die axialen Ränder (42, 43) des Spannbandes (6) eingreifen, und/oder dass zur Festlegung der Spanneinrichtung (4) die Schenkel (26, 27) einen radialen Ansatz (39) aufweisen zwecks Abfangung der Spanneinrichtung (4) und/oder deren Spannband (6) in axialer Richtung.

9. Heizvorrichtung nach einem der Ansprüche 1 bis 8, **dadurch gekennzeichnet, dass** in radialer Richtung zwischen dem Heizelement (30) und der dieses umgebenden Spanneinrichtung (4), insbesondere deren Spannband (6), eine Schicht (40) aus elektrisch isolierendem und/oder wärmeisolierendem Material angeordnet ist.

10. Heizvorrichtung nach einem der Ansprüche 1 bis 9, **dadurch gekennzeichnet, dass** eine mit der Spanneinrichtung (4), insbesondere deren Spannband (6), verbundene oder verbindbare Abdeckung (22) vorgesehen ist, welche bevorzugt zumindest teilweise mit der Spanneinrichtung (4) und/oder deren Spannband (6) verbunden oder verbindbar ist, wobei innerhalb der Abdeckung (22) der oder die elektrischen Anschlüsse des Heizelements (30) und/oder eines im Grundkörper (2) angeordneten Temperaturfühlers (41) vorgesehen sind.

## Claims

1. A heating device for heating a component, containing an essentially annular base body (2), which has a bearing surface (10) adapted and/or matched to the outer surface of the component and consists of a material that conducts heat well and also has a radially outwardly open recess (28) for accommodating a heating conductor (32) and further containing a clamping apparatus (4), which surrounds the base body (2) and the heating conductor (32) and by means of which the heating device can be fastened on the in particular cylindrical outer surface of the component, wherein the heating conductor(s) (32) are embedded into an electrical insulation (34) and together with the same form an integrated heating element (30), which bears with its outer surface on the continuous wall surface (29) of the recess (28) with a predetermined prestress, wherein the heating element (30) is pressed into the recess (28) by means of the clamping band (6),
**characterised in that** the base body (2) is constructed in one piece and has an essentially U-shaped cross section with two legs (26, 27) that are arranged at the axial ends and radially outwardly directed, between which legs the recess (28) is located.

2. The heating device according to Claim 1, **characterised in that** the heating element (30) is constructed as a preassembled one-piece and/or deformable module.

3. The heating device according to Claim 1 or 2, **characterised in that** the insulation (34) of the heating element (30) is constructed in a flexible and/or elastic or plastically deformable manner and/or **in that** the electrical insulation (34) consists of a material with high thermal conductivity.

4. The heating device according to one of Claims 1 to 3, **characterised in that** the clamping apparatus (4) contains a clamping band (6), which externally bears on the base body (2), in particular the legs or webs (26, 27) thereof; and/or **in that** the heating device in the mounted state bears on the component with a prestress force predetermined by means of the clamping device (8) and/or **in that** the clamping apparatus (4), particularly the clamping band (6) thereof, has a thermal conductivity lower than that of the base body (2) by a predetermined amount.

5. The heating device according to one of Claims 1 to 4, **characterised in that** the base body (2) is constructed as a preassembled shaped body and/or as a rotary part and/or **in that** the base body (2) consists of a material that conducts heat well, particularly aluminium, brass or a comparable material in terms of thermal conductivity or alloy thereof.

6. The heating device, particularly according to one of Claims 1 to 5, **characterised in that** the free ends (42, 43) of the clamping band (6) are angled and/or bent radially inwards in the region of a gap (14) of the base body (2) for the purpose of fastening the clamping apparatus (4) with respect to the base body (2) in the circumferential direction.

7. The heating device according to one of Claims 1 to 6, **characterised in that** the clamping band (6) has axial edges (36, 37), which are angled radially inwards to the longitudinal axis (12) and bear on the axial end faces of the webs (26, 27).

8. The heating device according to one of Claims 1 to 6, **characterised in that** the legs (26, 27) have a circumferential groove (38) in the region of the radially outwardly directed ends thereof, into which groove the axial edges (42, 43) of the clamping band (6) engage, and/or **in that** to fasten the clamping apparatus (4), the legs (26, 27) have a radial shoulder (39) for the purpose of capturing the clamping apparatus (4) and/or the clamping band (6) thereof in the axial direction.

9. The heating device according to one of Claims 1 to 8, **characterised in that** a layer (40) made up of electrically insulating and/or thermally insulating material is arranged in the radial direction between the heating element (30) and the clamping apparatus (4) surrounding the same, particularly the clamping band (6) thereof.

10. The heating device according to one of Claims 1 to 9, **characterised in that** a cover (22) connected or connectible to the clamping apparatus (4), particularly the clamping band (6) thereof, is provided, which cover preferably is or can be connected at least to some extent to the clamping apparatus (4) and/or the clamping band (6) thereof, wherein the electrical connection(s) of the heating element (30) and/or a temperature sensor (41) arranged in the base body (2) are provided within the cover (22).

## Revendications

1. Dispositif de chauffage pour chauffer un composant, comprenant un corps de base (2) sensiblement annulaire qui présente une surface d'appui (10) accordée et/ou adaptée à la surface extérieure du composant et qui se compose d'un matériau à bonne conductivité thermique ainsi qu'un évidement (28) ouvert radialement vers l'extérieur pour le logement d'un conducteur chauffant (32), et comprenant en outre un dispositif de serrage (4) entourant le corps de base (2) et le conducteur chauffant (32) à l'aide duquel il est possible de fixer le dispositif de chauffage sur la surface extérieure, en particulier cylindrique, du composant, le ou les conducteur (s) chauffant (s) (32) étant intégrés dans une isolation électrique (34) et formant, ensemble avec celle-ci, un élément chauffant uniforme (30) qui repose avec sa surface extérieure contre la surface de paroi continue (29) de l'évidement (28) avec une précontrainte prédéfinie, l'élément chauffant (30) étant pressé dans l'évidement (28) au moyen de la bande de serrage (6),
**caractérisé en ce que** le corps de base (2) est réalisé d'une seule pièce et présente une section transversale sensiblement en forme de U avec deux branches (26, 27) disposées aux extrémités axiales et orientées radialement vers l'extérieur, entre lesquelles se trouve l'évidement (28).

2. Dispositif de chauffage selon la revendication 1, **caractérisé en ce que** l'élément chauffant (30) est réalisé en tant que bloc préfabriqué d'une seule pièce et/ou déformable.

3. Dispositif de chauffage selon la revendication 1 ou 2, **caractérisé en ce que** l'isolation (34) de l'élément chauffant (30) est réalisée de manière flexible et/ou déformable élastiquement ou plastiquement et/ou **en ce que** l'isolation électrique (34) se compose d'un matériau à capacité de thermoconduction élevée.

4. Dispositif de chauffage selon l'une des revendications 1 à 3, **caractérisé en ce que** le dispositif de serrage (4) comprend une bande de serrage (6) qui est soutenue à l'extérieur sur le corps de base (2), en particulier sur les branches ou nervures (26 ; 27) de celui-ci et/ou **en ce que**, à l'état monté, le dispositif de chauffage est soutenu sur le composant avec une force de précontrainte prescrite au moyen du dispositif de serrage (8) et/ou **en ce que** le dispositif de serrage (4), en particulier la bande de serrage (6) de celui-ci, présente une capacité thermoconductrice plus faible de l'ordre d'une quantité prédéfinie que le corps de base (2).

5. Dispositif de chauffage selon l'une des revendications 1 à 4, **caractérisé en ce que** le corps de base (2) est réalisé en tant que corps moulé préfabriqué et/ou en tant qu'élément rotatif et/ou **en ce que** le corps de base (2) se compose d'un matériau à bonne conductivité thermique, en particulier en aluminium, en laiton ou en un matériau ou alliage à capacité thermoconductrice comparable.

6. Dispositif de chauffage, en particulier selon l'une des revendications 1 à 5, **caractérisé en ce que** les extrémités libres (42, 43) de la bande de serrage (6) sont coudées et/ou recourbées radialement vers l'intérieur dans la zone d'une fente (14) du corps de base (2) pour les besoins de fixation du dispositif de serrage (4) par rapport au corps de base (2) dans la direction périphérique.

7. Dispositif de chauffage selon l'une des revendications 1 à 6, **caractérisé en ce que** la bande de serrage (6) présente des bords axiaux (36, 37), lesquels sont coudés radialement vers l'intérieur par rapport à l'axe longitudinal (12) et reposent contre les surfaces frontales axiales des nervures (26, 27).

8. Dispositif de chauffage selon l'une des revendications 1 à 6, **caractérisé en ce que** les branches (26, 27) présentent, dans la zone de leurs extrémités orientées radialement vers l'extérieur, une rainure périphérique (38) dans laquelle les bords axiaux (42, 43) de la bande de serrage (6) sont en prise et **en ce que**, pour la fixation du dispositif de serrage (4), les branches (26, 27) présentent une saillie radiale (39) pour les besoins d'interception du dispositif de serrage (4), et/ou de la bande de serrage (6) de celui-ci, dans la direction axiale.

9. Dispositif de chauffage selon l'une des revendications 1 à 8, **caractérisé en ce que**, en direction radiale entre l'élément chauffant (30) et le dispositif de serrage (4) qui l'entoure, en particulier la bande de serrage (6) de celui-ci, une couche (40) en un matériau d'isolation électrique et/ou d'isolation thermique est disposée.

10. Dispositif de chauffage selon l'une des revendications 1 à 9, **caractérisé en ce que** l'on prévoit un recouvrement (22) relié, ou pouvant être relié au dispositif de serrage (4), en particulier à la bande de serrage (6) de celui-ci, lequel recouvrement est relié, ou peut être relié de manière préférée au dispositif de serrage (4) et/ou à la bande de serrage (6) de celui-ci, de façon au moins partielle, le ou les raccordements électriques de l'élément chauffant (30) et/ou d'un capteur de température (41) disposé dans le corps de base (2) étant prévus à l'intérieur du recouvrement (22).
